# EUROPEAN PATENT APPLICATION

(11) **EP 2 447 526 A1**
(43) Date of publication of application: **02.05.2012**
(21) Application number: 10791988.8
(22) Date of filing: 12.06.2010
(51) Int. Cl.: F03D 3/06, F03D 7/06

(54) **ROTATION BLADE-TYPE VERTICAL AXIS WIND TURBINE**

(30) Priority: 25.06.2009 JP 2009167231
(71) Applicant: Onodera, Takayoshi, Chiba 299-4114 (JP)
(72) Inventor: Onodera, Takayoshi, Chiba 299-4114 (JP)
(74) Representative: Cabinet Plasseraud
(86) International application number: PCT/JP2010/059984
(87) International publication number: WO 2010/150670

(57) **Abstract**

To provide a rotating-blade vertical-axis wind turbine capable of improving wind turbine efficiency and dealing with strong winds as well as capable of upsizing. For that, a rotating-blade vertical-axis wind turbine includes a wind-direction shaft of a wind vane mounted in a direction opposite to a rotation direction in the range of between 10° and 30° (both inclusive) from a regular reference mounting angle.

## Description

### [Technical Field]

The present invention relates to a vertical-axis wind turbine.

### [Background Art]

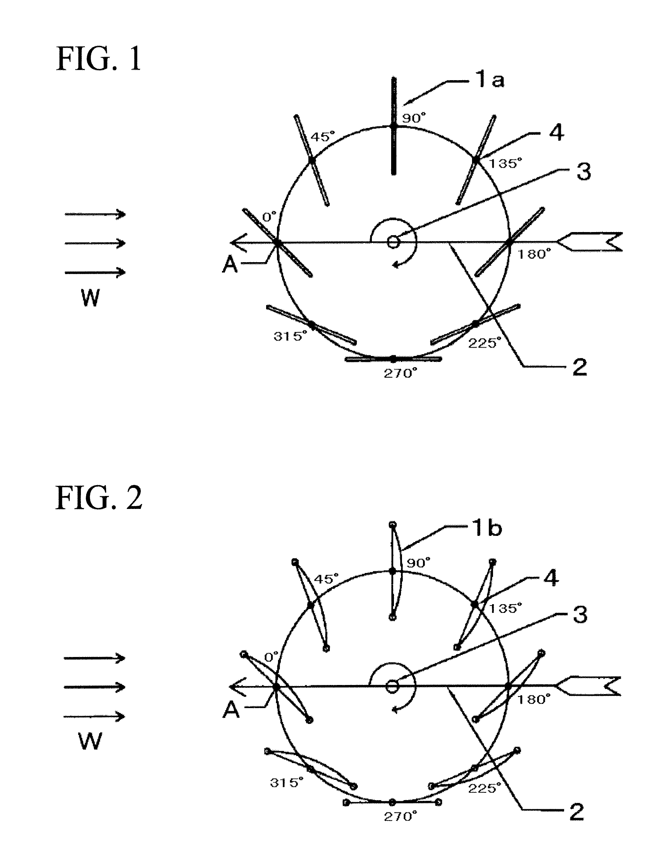

Figure 1 is a diagram showing operating principles of a conventional rotating-blade vertical-axis wind turbine (hereinafter simply referred to as a "conventional wind turbine"). The figure schematically shows at 45° intervals how a rotating blade 1a turns on a rotating shaft 4 when the conventional wind turbine rotates clockwise from 0° to 360° around a central shaft 3 (as viewed from above).

The inventor has already proposed a rotating-blade vertical-axis wind turbine (hereinafter simply referred to as the "proposed wind turbine") in Patent Literature 1 described below. The proposed wind turbine achieves a far higher efficiency than the conventional one by causing sail cloth to function as wings: slightly slack, vertically long sail cloth is stretched over left and right vertical frame members which make up a frame of multiple vertically long rotating blades 1b of the proposed wind turbine while upper and lower horizontal members are left free without application of sail cloth thereto.

Figure 2 is a diagram for illustrating operating principles of the proposed wind turbine. The proposed wind turbine shown in Figure 2 differs from the conventional wind turbine of Figure 1 in that the sail cloth attached to the rotating blades is caused to function as wings by being curved with some slack in a left-and-right direction. The conventional wind turbine in Figure 1 encounters a strong head wind in an interval between 180° and 360° and has its rotational forces impeded. Conversely, beings capable of making the sail cloth function as wings, the proposed wind turbine in Figure 2 can generate strong rotational forces.

### [Citation List]

### [Patent Literature]

### [Patent Literature 1]

Japanese Patent No. 4280798

### [Summary of Invention]

### [Technical Problem]

Now, elevation angle adjustment of the rotating blades of the proposed wind turbine will be described. First, in Figure 2, when the proposed wind turbine rotates clockwise, a point at which a streamline of a wind passing through a center of an axis of revolution intersects an orbital circle (which is a trajectory followed when the rotating shaft 4 revolves around the central shaft 3) first is designated as point A (at an orbital angle of 0°). The rotating blades 1b are adjusted such that the rotating shaft 4 serving as a rotation center of a given rotating blade 1b will be perpendicular to the streamline of the wind (at a rotation angle of 90°) and subjected to maximum drag when located at an orbital angle of 90° and will be parallel to the streamline of the wind (at a rotation angle of 0°) when located at an orbital angle of 270°. As a result of such adjustments, the rotation angle of the rotating blade 1b is 45° when the rotating blade is located at an orbital angle of 0° and the rotation angle of the rotating blade 1b is 135° when the rotating blade 1b is located at an orbital angle of 180°. With such angle adjustments of the rotating blade 1b, the highest torque is generated at startup if the elevation angle of the blade is set to half the angle between the wind direction and the traveling direction of the blade.

However, the proposed wind turbine has a problem. That is, once rotated, each rotating blade encounters the wind from a circumferential direction caused by the rotation, which is expected to complicate the situation. Thus, the angle adjustments described above cannot necessarily be said to be the best.

When the proposed wind turbine rotates, the wind incident upon each blade is a resultant wind of an actual wind and a circumferential wind generated by the rotation. One of methods for obtaining an optimal elevation angle by detecting the wind direction of the resultant wind involves setting up a wind-direction shaft in close vicinity to the rotating shaft of the rotating blade. However, there is a problem in that when a circumferential velocity ratio approaches 1, the wind weakens in an area which catches a tail wind, i.e.., in an interval between an orbital angle of 45° and orbital angle of 135°, allowing the proposed wind turbine to revolve with a wind vane remaining stopped. On the other hand, there is also a problem in that in an interval between an orbital angle of 135° and orbital angle of 270°, the wind abruptly grows stronger, causing the wind vane to move sharply and overshoot or causing multiple wind-direction shafts to bound and rebound. The bounding and rebounding will cause considerable impediment to rotational forces. Unless the problems are solved, it is extremely difficult to adopt the method which places the wind vane in close vicinity to the rotating shafts.

Generally, the rotation of vertical-axis wind turbines needs to be stopped during strong winds. However, there is a problem in that the rotating-blade vertical-axis wind turbines, which have far larger wind-catching surface areas than other types of vertical-axis wind turbines, are subjected to high loads and are rather highly likely to get destroyed if their rotation is stopped in strong winds.

Among conventional vertical-axis wind turbines, only Darrieus wind turbines can achieve large sizes. Blades of the Darrieus wind turbines are wing-shaped in cross section and shaped as a trochoidal curve, which is the shape of a so-called jumping rope, in a longitudinal direction of the wing-shape. The curved shape, which does not exert centrifugal force on the wing, is extremely advantageous in structural terms, but a rotational force is produced only around a peak of the so-called jumping rope at which the radius is the largest. Consequently, there is a problem in that the Darrieus wind turbines are not capable of self-starting, making the wind turbines very inefficient in weak winds.

Other examples of the vertical-axis wind turbines include straight-wing wind turbines. The straight-wing wind turbine is more efficient than the Darrieus wind turbine because wings which generate rotational forces are located on peripheral part of the straight-wing wind turbine. However, the straight-wing wind turbine has a problem in that when the wind turbine is increased in size, mass of the wings located on the outer periphery will produce a high centrifugal force in strong winds. Therefore, a megawatt-class large straight-wing vertical-axis wind turbine has not been realized at present.

In view of the above problems, an object of the present invention is to provide a rotating-blade vertical-axis wind turbine capable of improving wind turbine efficiency and dealing with strong winds as well as capable of upsizing.

### [Solution to Problem]

In a rotating-blade vertical-axis wind turbine according to first means for solving the above problems, a wind-direction shaft of a wind vane is mounted in a direction opposite to a rotation direction in the range of between 10° and 30° (both inclusive) from a regular reference mounting angle.

Also, a rotating-blade vertical-axis wind turbine according to another perspective for solving the above problems comprises: a central shaft; and a rotating blade adapted to revolve around the central shaft while turning on its own axis, wherein the rotating blade includes a pair of upper and lower horizontal frame members, a pair of left and right vertical frame members, a plurality of ropes or lightweight structures arranged in the form of wings between the pair of upper and lower horizontal frame members, and sail cloth stretched between the pair of vertical frame members.

Also, a rotating-blade vertical-axis wind turbine according to another perspective for solving the above problems comprises: a central shaft; a rotating blade adapted to revolve around the central shaft while turning on its own axis; and a wind vane placed in close vicinity to the rotating shaft of the rotating blade.

Also, a rotating-blade vertical-axis wind turbine according to another perspective for solving the above problems comprises: a central shaft; a rotating blade adapted to revolve around the central shaft while turning on its own axis; and a fixed straight wing.

Also, a rotating-blade vertical-axis wind turbine according to another perspective for solving the above problems comprises: a central shaft; and a plurality of rotating blades adapted to revolve around the central shaft while turning on their own axes, wherein the plurality of rotating blades are arranged in radial and circumferential directions of the revolution.

Also, a rotating-blade vertical-axis wind turbine according to another perspective for solving the above problems comprises a rolling-curtain-type or measuring-tape-type winding box with a take-up spring mounted on at least one of left and right sides of a sail frame to deal with strong winds, wherein a thin cord is wound off against a winding force in strong winds and sail cloth is loosely bound by a thin cord or the like in a central portion of a vertical sail frame to allow strong winds to escape from both sides, a long winding time is provided using, for example, a balance wheel or the like to prevent oscillations caused by alternate high and low wind pressures applied perpendicularly to a sail cloth surface due to rotation of the sail cloth, and consequently the winding box returns gradually when wind velocity falls off.

Also, a rotating-blade vertical-axis wind turbine according to another perspective for solving the above problems comprises: a central shaft; and a plurality of rotating blades adapted to revolve around the central shaft while turning on their own axes, wherein each of the rotating blades includes a pair of upper and lower horizontal frame members, a pair of left and right vertical frame members movable by being linearly guided along the horizontal frame members, sail cloth stretched between the pair of vertical frame members, and a sail winding bar placed penetrating the sail cloth via a clutch and adapted to wind the sail cloth by rotation of the sail winding bar.

Also, a rotating-blade vertical-axis wind turbine according to another perspective for solving the above problems comprises: a central shaft; and a plurality of rotating blades adapted to revolve around the central shaft while turning on their own axes, wherein each of the rotating blades includes a pair of upper and lower horizontal frame members, a pair of left and right vertical frame members, at least one of which is movable by being linearly guided along the horizontal frame shafts, and sail cloth stretched between the vertical frame members; and at least one of the left and right vertical frame members is a rolling-curtain-type winding drum.

Also, a mobile offshore energy storage facility according to another perspective for solving the above problems comprises a plurality of large rotating-blade vertical-axis wind turbines placed on a mobile offshore base.

### [Advantageous Effects of Invention]

Thus, the present invention provides a rotating-blade vertical-axis wind turbine capable of improving wind turbine efficiency and dealing with strong winds as well as capable of upsizing.

### [Brief Description of the Drawings]

[Figure 1] Figure 1 is a diagram showing how a rotating blade of a conventional rotating-blade vertical-axis wind turbine rotates.
[Figure 2] Figure 2 is a diagram showing how rotating blades of a rotating-blade vertical-axis wind turbine according to Patent Literature 1 rotate.
[Figure 3] Figure 3 is a top view of a rotating-blade vertical-axis wind turbine according to a first embodiment.
[Figure 4] Figure 4 is a top view of a rotating-blade vertical-axis wind turbine according to a second embodiment.
[Figure 5] Figure 5 is a top view of a rotating-blade vertical-axis wind turbine according to a third embodiment.
[Figure 6] Figure 6 is a top view of the rotating-blade vertical-axis wind turbine according to the third embodiment.
[Figure 7] Figures 7(a) to 7(d) are diagrams each showing a cross section of the rotating blade according to the third embodiment as viewed from above.
[Figure 8] Figure 8 is a partial front view of the rotating-blade vertical-axis wind turbine according to the second embodiment.
[Figure 9] Figures 9(a) to 9(C) are diagrams showing an example of a rotating blade provided with measures against strong winds.
[Figure 10] Figure 10 is a diagram showing an example of a rotating blade provided with measures against strong winds.
[Figure 11] Figure 11 is a diagram showing an example of a rotating blade provided with measures against strong winds.
[Figure 12] Figure 12 is a diagram showing an example of a rotating blade provided with measures against strong winds.
[Figure 13] Figure 13 is a diagram showing an example of a rotating blade provided with measures against strong winds.

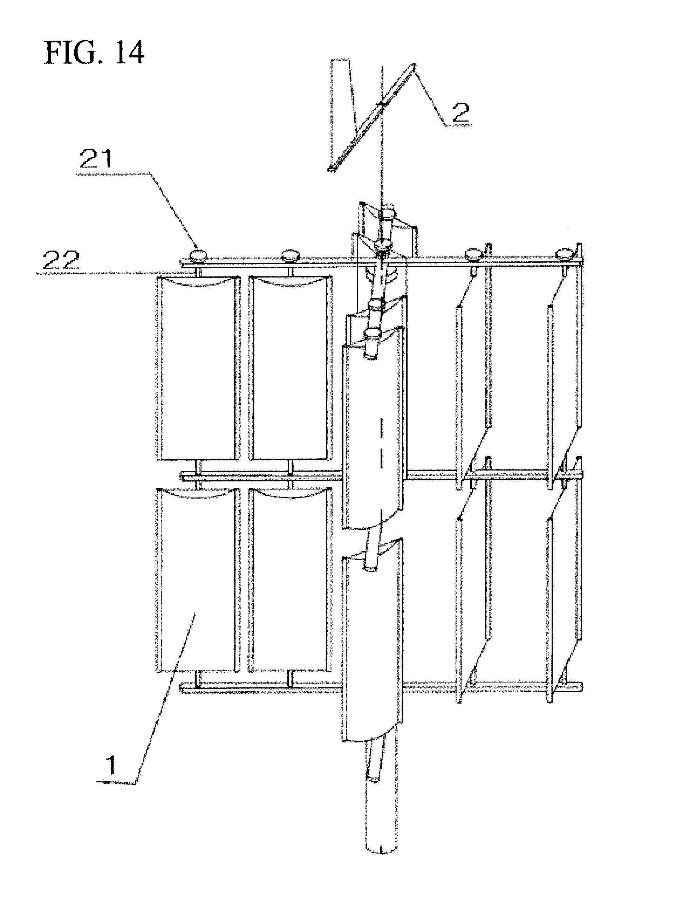

[Figure 14] Figure 14 is a perspective view of a rotating-blade vertical-axis wind turbine according to a fourth embodiment.
[Figure 15] Figure 15 is a diagram showing an example of a wind energy storage facility placed offshore.
[Figure 16] Figure 16 is a graph showing experimental results on a relationship between circumferential velocity ratio and power factor when a wind vane indicates a 0° shift from a reference angle in the first embodiment.
[Figure 17] Figure 17 is a graph showing experimental results on a relationship between circumferential velocity ratio and power factor when a wind vane indicates a -20° shift from the reference angle (example shown in Figure 3) in the first embodiment.

### [Description of Embodiments]

Embodiments of the present invention will be described in detail below with reference to the accompanying drawings. However, the present invention can be embodied in many different forms, and is not limited to the exemplary embodiments described below. In the embodiments described below, structures of rotating blades and wind vanes can be adjusted as appropriate and may be applied to other embodiments whenever possible.

### (First embodiment)

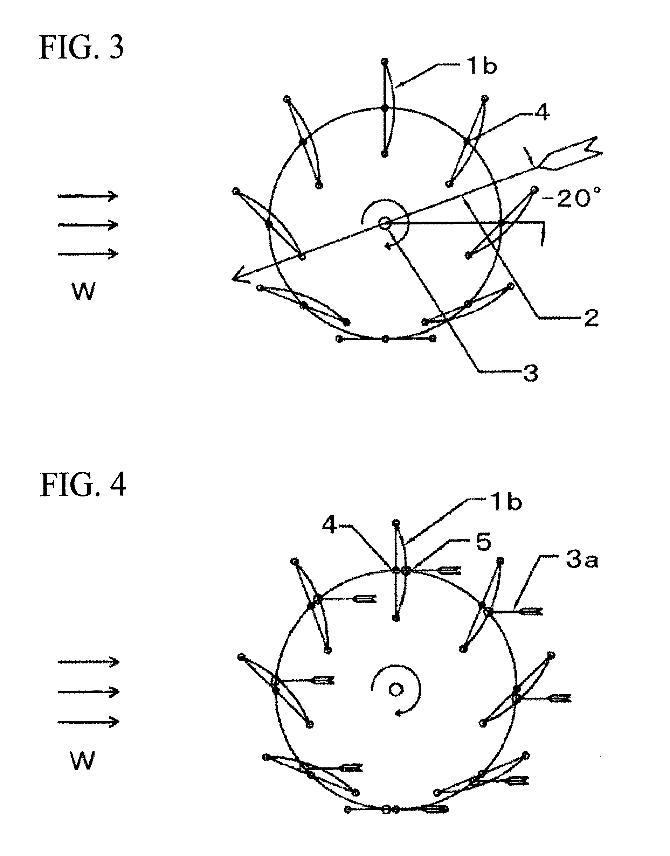

Figure 3 is a schematic diagram of a rotating-blade vertical-axis wind turbine (hereinafter simply referred to as the "present wind turbine") according to the present embodiment as viewed from above. As shown in Figure 3, the present wind turbine includes a central shaft 3; multiple rotating blades 1b arranged around the central shaft 3, adapted to rotate (revolve) around the central shaft 3, and configured to be able to turn on respective rotating shafts 4; and a wind vane 2 placed on top of the central shaft 3. In the present wind turbine, the rotating shafts 4 are supported by arms and adapted to rotatably support the respective rotating blades 1b, where the arms are connected to the central shaft 3 and adapted to rotate together with the central shaft 3.

The rotating blades 1b according to the present embodiment are made of sail cloth and configured to be rotatable around the respective rotating shafts 4, but are not limited in this respect. The rotating blades 1b are equipped with a pair of left and right vertical frame members and a pair of upper and lower horizontal frame members and attached to the pair of left and right vertical frame members by being curved with some slack. Being left free without being fixed to the upper and lower horizontal frame members, the rotating blades 1b are caused to function as wings. Since sail cloth is used for wings, the present wind turbine can reduce the weight of the rotating blades and increase the size without large increases in weight. Also, the present wind turbine is a drag and lift wind turbine, and thus there is not much fear that the rotation will become excessively fast. For these two reasons, it is quite possible that a large vertical-axis wind turbine can be realized without increases in centrifugal force.

Also, according to the present embodiment, the wind vane 2 is fixed to the central shaft, making it possible to turn the wind turbine in the true wind direction. A wind-direction shaft of the wind vane 2 is mounted in a direction opposite to a rotation direction in the range of between 10° and 30° (both inclusive) from a regular reference mounting angle. The rotation direction may be either clockwise or counterclockwise. In Figure 3, the wind vane 2 is mounted, being shifted by -20°.

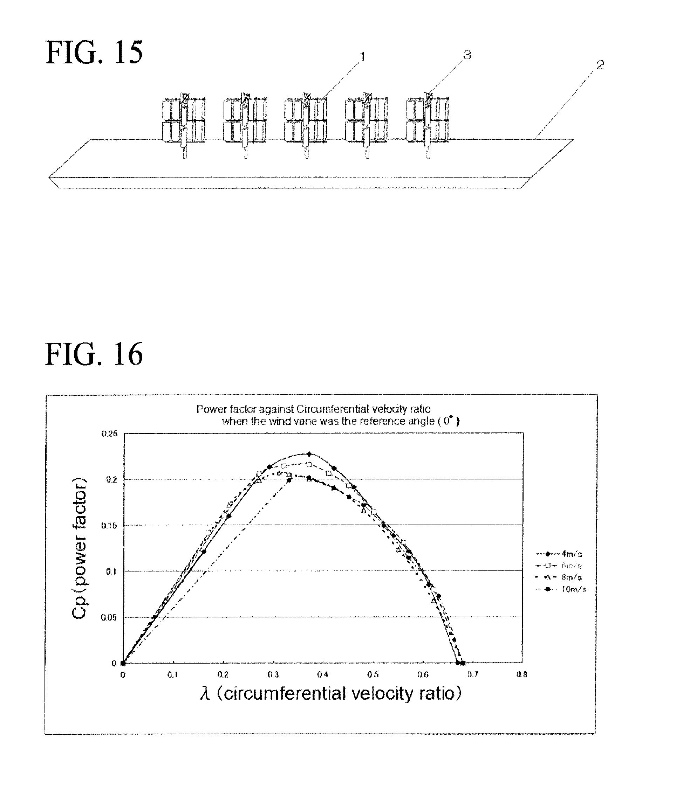

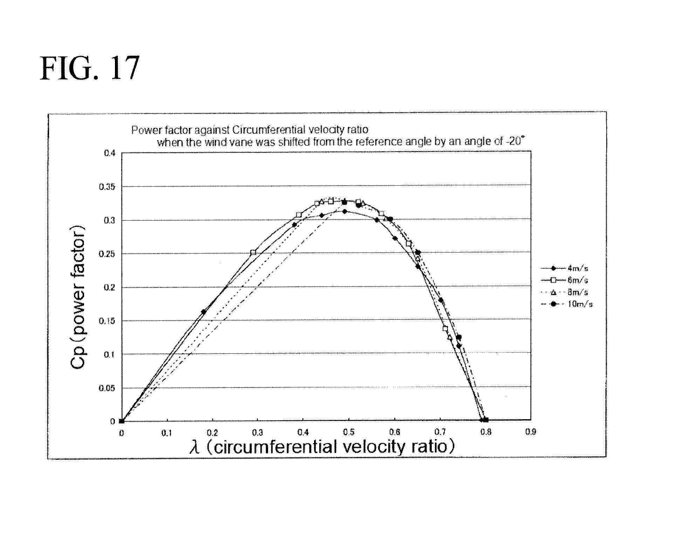

When one wind-direction shaft is provided in the center of the central shaft of a wind turbine as in the case of the present wind turbine, the elevation angle is adjusted with respect to the wind-direction shaft. Regarding the position of the wind vane, using an orbital angle of 0° as a reference position, wind-tunnel testing was conducted and power factors (Cp values) were measured with the wind-direction shaft of the wind vane shifted by ±10°, ±20°, and ±30°. Measurement results of the Cp value when the wind vane was at a reference angle (with a shift angle of 0°) are shown in Figure 16 and measurement results of the Cp value when the wind vane was shifted from the reference angle by an angle of -20° are shown in Figure 17.

The results shown in Figure 16 indicate that when the wind velocity is relatively low (4 m/s and 6 m/s), the Cp value, i.e., an energy acquisition rate, is approximately 0.22, which is higher than when the wind velocity is relatively high (8 m/s and 10 m/s). Thus, it can be seen that when the wind vane is at the reference angle (with a shift angle of 0°), high efficiency is obtained in an interval in which the circumferential velocity is relatively low, i.e., the wind velocity is relatively low.

On the other hand, the results shown in Figure 17 indicate that the Cp value is approximately 0.325, which is approximately 1.5 times higher than at the reference angle (with a shift angle of 0°). This indicates a tendency opposite to that of Figure 16, meaning that the higher the wind velocity, the higher the energy acquisition rate. Although the Cp value is slightly low at a wind velocity of 4 m/s, similar curves are followed without dependence on the wind velocity. As can be seen from the results shown in Figures 16 and 17, with the wind turbine rotating clockwise, when the wind vane is changed from the reference angle by an angle of -20°, the efficiency becomes 1.5 times higher than when the wind vane is set at the reference angle. Consequently, it was found that the highest efficiency is obtained when the shift angle is -20° and that efficiency sufficiently higher than available with the conventional wind turbine can be secured when the shift angle is within about - 20° ±10°.

Although results obtained when the wind turbine is rotated clockwise in a top view are discussed above, it is believed that similar results will naturally be obtained when the wind turbine rotates in the opposite direction (counterclockwise).

Thus, it was found that preferably the present wind turbine is mounted in a direction opposite to the rotation direction in a range of 20° ±10°, i.e., between 10° and 30° (both inclusive), from the regular reference mounting angle (shift angle of 0°).

### (Second embodiment)

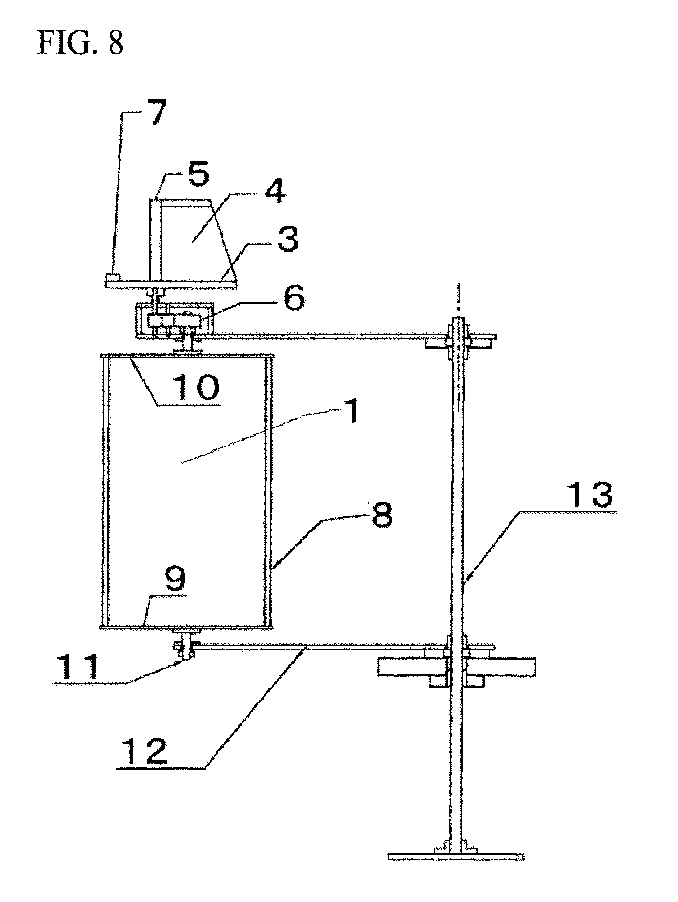

A wind vane 3a in Figure 4 includes a wind-direction shaft fixed near a rotating shaft 11, a tail 4 installed on the wind-direction shaft, and a balance weight 7 as shown in Figure 8. In order to prevent the wind vane 3a in Figure 4 from overshooting and rebounding, it is necessary first of all to maximize the sensitivity of the wind vane and minimize overall weight. For that, preferably the tail is made of lightweight sail cloth. Also, preferably the wind-direction shaft is kept in balance using the balance weight.

Also, the present wind turbine is advantageous in preventing overshoots because the tail of the wind vane can be caused to change direction slowly if the wind turbine diameter (twice the distance between the central shaft and rotating shaft) is increased to decrease rotational velocity. If the wind vane tail of the wind turbine is made of sail cloth and configured to be relatively large in area and if the wind turbine diameter is set to be as large as 3 m, the problem of wind vane overshoots can be avoided.

### (Third embodiment)

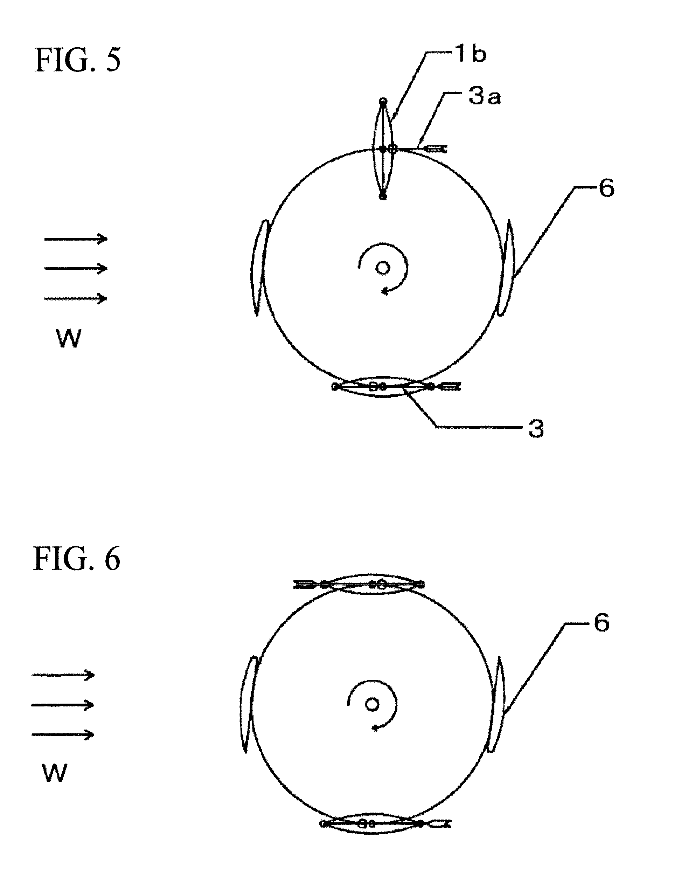

Figures 5 and 6 are top views of a rotating-blade vertical-axis wind turbine (hereinafter simply referred to as the "present wind turbine") according to the present embodiment, specifically showing a combination of fixed straight wings 6 and rotating blades (1b+3a). The rest of the configuration is roughly the same as the second embodiment. Incidentally, Figure 5 shows a top view of the present wind turbine when wind velocity ratio during or after rotation is 1 or less and Figure 6 shows a top view when the wind velocity ratio is larger than 1.

By combining the fixed straight wings 6 and the rotating blades (1b+3a), the present embodiment makes it possible to maintain high starting characteristics using the rotating blades 1b and take advantage of the fixed straight wings 6. Also, as can be seen from Figure 6, even when the wind velocity ratio exceeds 1, the rotating blades can generate rotational forces by maintaining an optimal elevation angle. Thus, the combination of the fixed straight wings 6 and the rotating blades 1b provides the advantage of being able to avoid the problem of overshoots more easily by passing through nonstop the neighborhood of a zone in which the circumferential velocity ratio is 1.

### (Fourth embodiment)

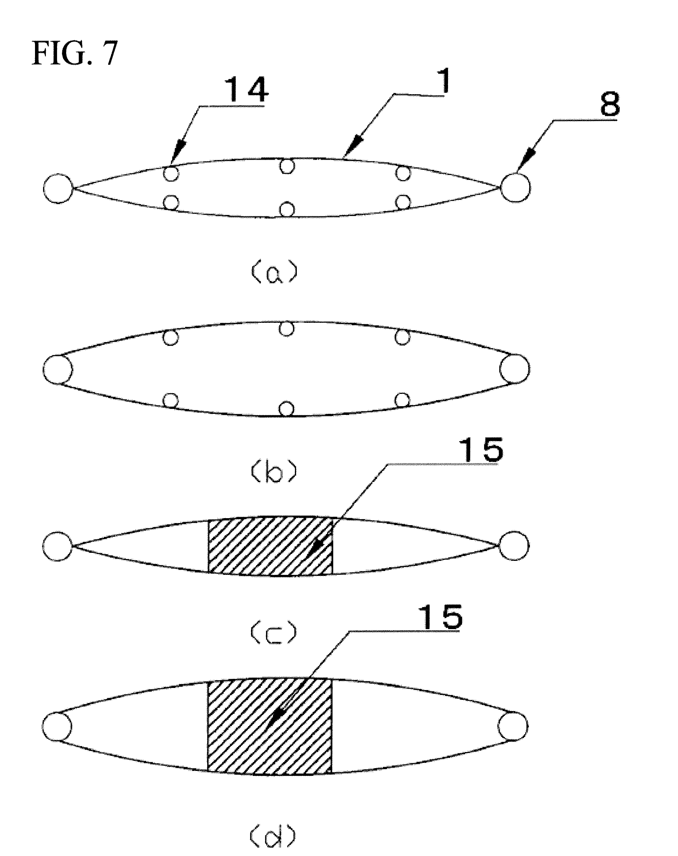

Figures 7 (a) to 7(d) are top sectional views seen from above, showing an example of a method for forming sail cloth which does not produce reversal noise. Figures 7 (a) and 7(b) are diagrams each showing a rotating blade constructed by installing ropes so as to define a wing-shaped cross section of the rotating blade and covering the ropes from outside the wing shape with sail cloth. In particular, Figure 7(a) shows a rotating blade in which left and right vertical frame members are not enveloped while Figure 7(b) shows a rotating blade in which the left and right vertical frame members are enveloped. On the other hand, Figures 7(c) and 7(d) show how a lightweight foamed material is used instead of the ropes in forming the wing shape. In particular, Figure 7(c) shows a rotating blade in which left and right vertical frame members are not enveloped while Figure 7(d) shows a rotating blade in which the left and right vertical frame members are enveloped.

### (Fifth embodiment)

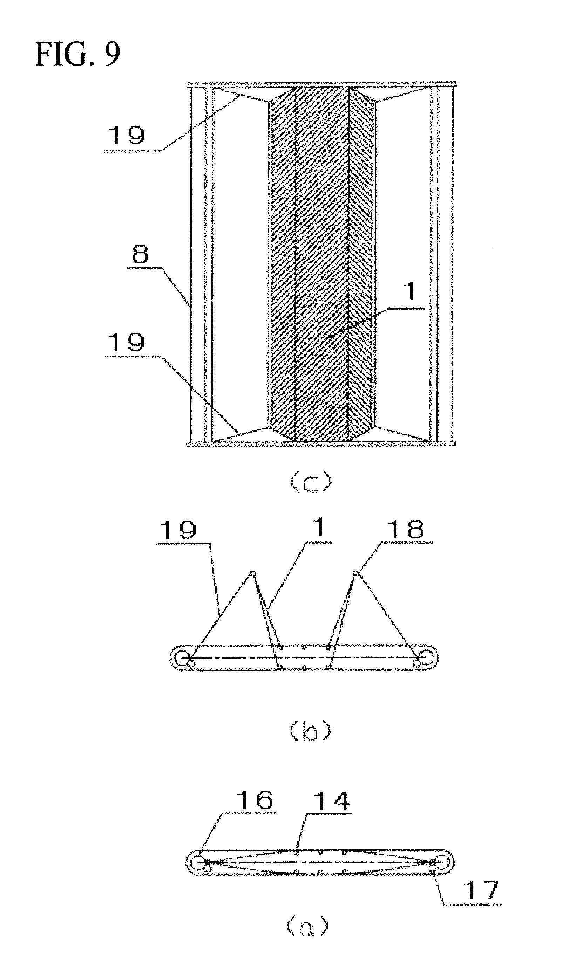

An example of a rotating blade provided with measures against strong winds is shown in Figures 9(a) to 9(C). Figure 9 (a) is a top view of a sail cloth wing in normal times. Figure 9 (b) is a top view of the sail cloth wing in operation during strong winds. Reference numeral 14 denotes ropes used to define a wing shape and reference numeral 16 denotes a winding drum equipped with a time switch which allows thin cords or the like once wound off in strong winds to be wound in after, for example, 5 hours. Reference numeral 17 denotes a rope guide mounted on the side opposite the winding side. Reference numeral 18 denotes stoppers installed at ends of the sail cloth wing. Reference numeral 19 denotes ropes or thin cords wound off in strong winds. Although the figures show an example in which the rotating blade is made of two sail cloth wings, of course the rotating blade may be made of a single sail cloth wing. In that case, however, two ropes are installed, sandwiching the sail in the center.

### (Sixth embodiment)

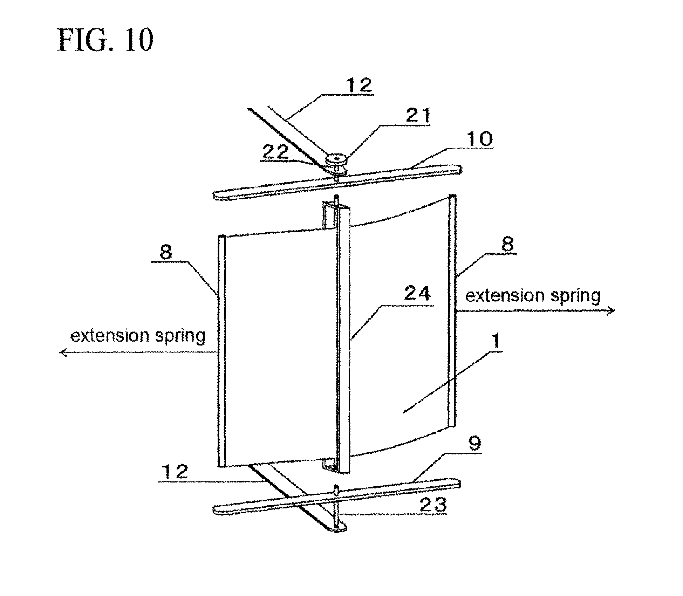

Figure 10 shows another example of a rotating blade provided with measures against strong winds. In the present rotating blade, a lower rotating shaft 23 is fixed to an arm 12. Of course, an upper rotating shaft is fixed to a horizontal frame member 10 and has its turning controlled by a timing pulley 21. At least one of vertical frame members 8 is configured to be movable by being guided linearly along horizontal frame members 9 and 10. The at least one of vertical frame members guided linearly is constantly pulled by an extension spring via a stopper. At the center of the horizontal frame members, a sail winding bar is set on both sides of the sail cloth, where the sail winding bar is capable of turning on its own axis. A lower end of the sail winding bar is coupled to the rotating shaft 23 via a clutch. In strong winds, the present wind turbine throws in the clutch, puts the sail winding bar 24 into operation (into rotation), and winds in the sail cloth until the remaining part of the sail cloth provides a safe area. This allows the rotation to be continued in strong winds by winding in the sail and thereby reducing the sail area. When the wind weakens, a reverse clutch is thrown in to rotate the sail winding bar 24 in the reverse direction and thereby return the pair of left and right vertical frame members to the original position. Incidentally, the rotation of the sail winding bar 24 may be decelerated by means of reduction gears.

### (Seventh embodiment)

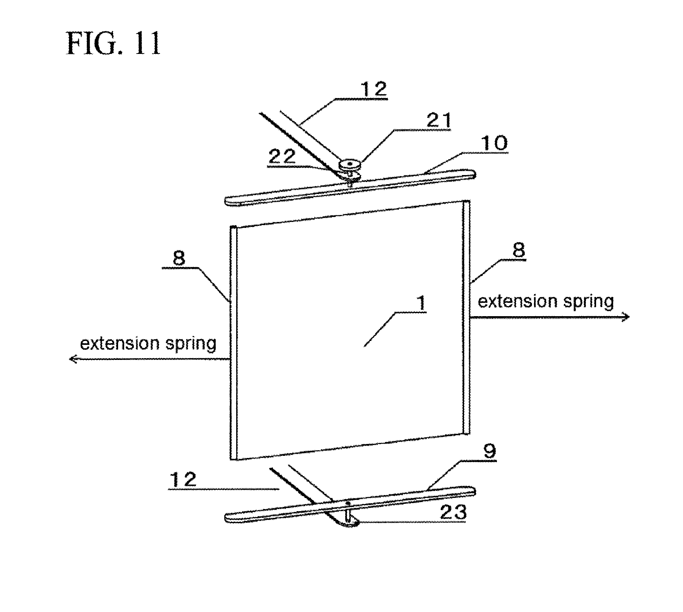

Figure 11 shows another example of a rotating blade provided with measures against strong winds. The present rotating blade includes a pair of horizontal frame members 9 and 10 equipped with rotating shafts 22 and 23, a pair of left and right vertical frame members 8 configured to move by being guided linearly along the horizontal frame members, and sail cloth 1 stretched over the vertical frame members. Instead of both vertical frame members, one of the vertical frame members may be guided linearly.
The vertical frame members guided linearly are fitted with extension springs via upper and lower stoppers installed on the horizontal frame members. In normal times, the sail cloth is caused to operate with some slack. On the other hand, in strong winds, the slack can be removed from the sail by pulling one of the left and right horizontal frame members 8 with the extension spring to reduce the generation of lift. The present measures against strong winds are effective when the maximum wind value is not very large.

### (Eighth embodiment)

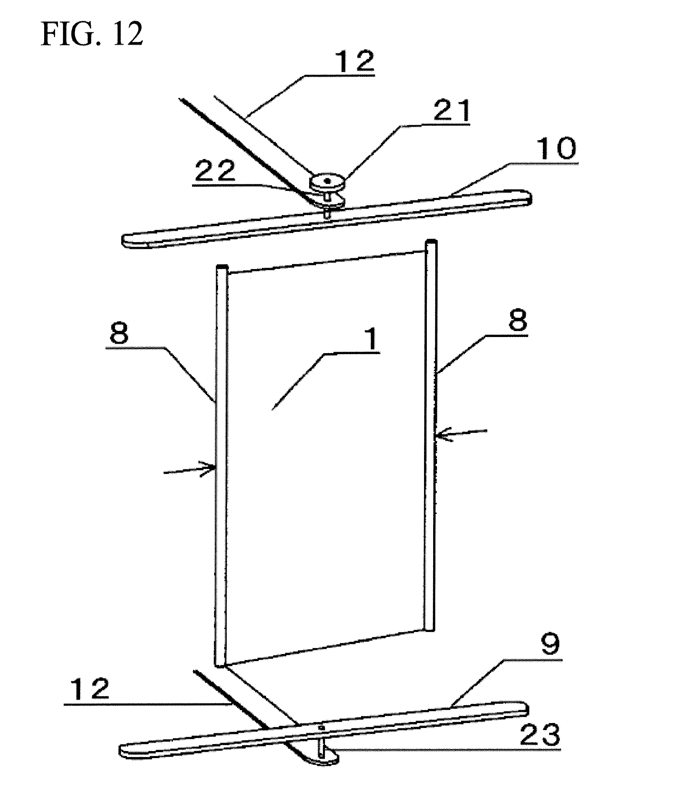

Figure 12 shows another example of a rotating blade provided with measures against strong winds.
The present rotating blade includes a pair of horizontal frame members 9 and 10 equipped with rotating shafts 22 and 23, a pair of left and right vertical frame members 8 configured to move by being guided linearly along the horizontal frame members, and sail cloth 1 stretched over the vertical frame members. Instead of both vertical frame members, one of the vertical frame members may be guided linearly, and the vertical frame member guided linearly is a rolling-curtain-type winding drum.
In normal times, the sail cloth is caused to operate with some slack. On the other hand, in strong winds, the sail is wound in by the winding drum, thereby reducing the sail width, and the winding is stopped when a safe width is reached.

### (Ninth embodiment)

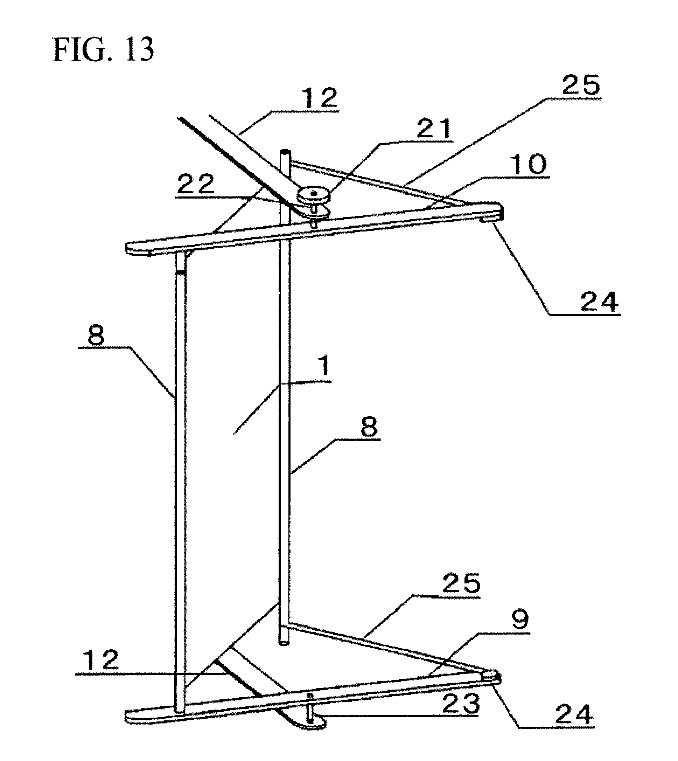

Figure 13 shows another example of a rotating blade provided with measures against strong winds. In Figure 13, reference numeral 24 denotes measuring-tape-type winding boxes and reference numeral 25 denotes thin cords wound off by a strong wind. A time switch is installed to wind in the thin cords after a lapse of a predetermined time.

### (Tenth embodiment)

The present embodiment is almost similar to the first embodiment, but differs from the first embodiment in that multiple rotating blades are arranged in radial and circumferential directions of revolution.

A rotating-blade vertical-axis wind turbine (hereinafter simply referred to as the "present wind turbine") according to the present embodiment includes a central shaft, and multiple arms rotatable (revolvable) around the central shaft. Also, the multiple rotating blades 1 are arranged on the multiple arms in the radial and circumferential directions of revolution via rotating shafts 22. A timing pulley 21 is installed on top of each rotating shaft, and the timing pulleys on the same arm are coupled via a timing belt. With this configuration, the present wind turbine has the advantage of being able to utilize winds more efficiently. The timing pulleys and timing belt are coupled at a gear ratio of 2:1. Incidentally, although in the present embodiment, the coupling is implemented by timing pulleys and a timing belt, the coupling may be implemented, for example, not by means of a timing belt but by means of bevel gears and a transmission shaft as long as timing can be maintained.

It has been confirmed by results of wind-tunnel testing that the rotating-blade vertical-axis wind turbine according to the present embodiment described above features (1) incomparably high efficiency in a low wind velocity zone and sufficiently high efficiency in medium to high wind velocity zones, (2) high safety compared to other lift wind turbines because the present wind turbine is a low rotational speed type, (3) low wind turbine manufacturing cost due to the use of sail cloth or the like for the rotating blades, (4) no need for particularly high technology in the production of the wind turbine, (5) capability to produce small to large wind turbines, short development periods, and relatively low development costs, and (6) high suitability also as a water pumping windmill because of low rotation and high torque. Thus, in view of the world trend to leave future energy problems to renewable energy as well as in view of the above features, it can be said that the rotating-blade vertical-axis wind turbine according to the present embodiment has infinitely wide applicability.

Also, as can be seen from the present embodiment, a large rotating-blade vertical-axis wind turbine, if implemented, can achieve high efficiency at low wind velocity. Consequently, sites considered up to now to be unsuitable because of low wind velocity can become suitable sites. Also, the large wind turbine lends itself to on-site assembly, and thus has far larger flexibility in construction than a large horizontal-axis wind turbine. Furthermore, there is basically no need for a tower, which is required by a large horizontal-axis wind turbine. Besides, since sail cloth is used for the rotating blades, the wind turbine can be manufactured at low cost. This makes it possible to provide an optimal system which satisfies urgent need for electricity in developing countries.

For mobile offshore wind power generation and mobile offshore energy storage facilities, large horizontal-axis wind turbines are planned to be used at present. However, whereas horizontal-axis wind turbines require a tower height larger than the wind turbine diameter, this is not the case with vertical-axis wind turbines. Since the height of the wind turbines can be reduced accordingly, reducing the total weight, the total construction cost for the facilities can be reduced greatly. Furthermore, since power can be generated efficiently even in a low wind velocity zone, the vertical-axis wind turbines have a high annual capacity factor. Figure 15 is a diagram showing an example of a wind energy storage facility made up of plural large rotating-blade vertical-axis wind turbines 3 placed on a mobile offshore base 2 kept afloat on the sea 1. The mobile offshore base 2 is moved by the power produced by the rotating-blade vertical-axis wind turbines 3. Also, the electric energy produced by the rotating-blade vertical-axis wind turbines 3 can, for example, be converted into hydrogen by electrolysis of water and then the hydrogen can be stored to enable energy conservation.

Thus, the present invention provides a rotating-blade vertical-axis wind turbine capable of improving wind turbine efficiency and dealing with strong winds as well as capable of upsizing.

### [Examples]

The wind turbines according to the above embodiments were actually constructed and effects thereof were verified.

### (Example 1)

The rotating-blade vertical-axis wind turbine (hereinafter simply referred to as the "present wind turbine") shown in the example of Figure 2 was constructed using three rotating blades. The mounting angle of the wind vane was shifted -20° from the position of the reference angle (0°) used before. As a result, the power factor of the wind turbine increased 30% compared to when the mounting angle was 0° (see Figures 15 and 16). The power factor showed an extremely high value of 0.32 at a wind velocity of 4 m/s.

### (Example 2)

The rotating-blade vertical-axis wind turbine (hereinafter simply referred to as the "present wind turbine") shown in the example of Figure 4 was constructed using three rotating blades. The central shaft of the wind vane was placed close to the rotating shafts of the sail cloth wings. The tail was made of sail cloth, the tail area was made relatively large, and the wind turbine diameter was set to be as large as 3 m. As a result, the problem of wind vane overshoots was avoided.

### (Example 3)

A prototype of the rotating-blade vertical-axis wind turbine (hereinafter simply referred to as the "present wind turbine") shown in the example of Figure 5 was constructed using two rotating blades and two fixed straight wings. The diameter of the wind turbine was 1 m. It was confirmed that the wind turbine easily started as shown in Figure 5, picked up speed, easily exceeded a circumferential velocity ratio of 1, and rotated as shown in Figure 6.

### (Example 4)

Rotating-blade vertical-axis wind turbines (hereinafter simply referred to as the "present wind turbines") with a diameter of 1 m were constructed using three each of the rotating blades shown in Figures 7(a), 7(b), 7(c), and 7(d), respectively. The wind turbines did not produce reversal noise when compared to the wind turbine shown in Figure 2, which uses a single rotating blade.

### (Example 5)

A rotating blade provided with measures against strong winds as shown in the example of Figure 9 was put through a wind-tunnel test. As a result, it was confirmed that the rotating blade operated at a wind velocity of 15 m/s and that the wind passed through the sail frame.

### (Example 6)

The rotating blade shown in the example of Figure 11 was structured such that one of a pair of left and right vertical frame members was pulled by a strong spring via a stopper, and the rotating blade was tested. As a result, the stopper came off in strong winds and the sail cloth was stretched tight, allowing the wind turbine to continue rotating up to a wind velocity of 40 m/s.

### [Industrial Applicability]

The present invention has industrial applicability as a rotating-blade vertical-axis wind turbine.

## Claims

1. A rotating-blade vertical-axis wind turbine, wherein a wind-direction shaft of a wind vane is mounted in a direction opposite to a rotation direction in the range of between 10° and 30° (both inclusive) from a regular reference mounting angle.

2. A rotating-blade vertical-axis wind turbine comprising:
a central shaft; and a rotating blade adapted to revolve around the central shaft while turning on its own axis,
wherein the rotating blade includes a pair of upper and lower horizontal frame members, a pair of left and right vertical frame members, a plurality of ropes or lightweight structures arranged in the form of wings between the pair of upper and
lower horizontal frame members, and sail cloth stretched between the pair of vertical frame members.

3. A rotating-blade vertical-axis wind turbine comprising:
a central shaft; the rotating blade adapted to revolve around the central shaft while turning on its own axis; and a wind vane placed in close vicinity to the rotating shaft of the rotating blade.

4. A rotating-blade vertical-axis wind turbine comprising:
a central shaft; and a rotating blade adapted to revolve around the central shaft while turning on its own axis,
wherein the rotating blade includes a rotating blade equipped with sail cloth, and a fixed straight wing.

5. A rotating-blade vertical-axis wind turbine comprising:
a central shaft; and a plurality of rotating blades adapted to revolve around the central shaft while turning on their own axes, wherein the plurality of rotating blades are arranged in radial and circumferential directions of the revolution.

6. A rotating-blade vertical-axis wind turbine comprising a rolling-curtain-type or measuring-tape-type winding box with a take-up spring mounted on at least one of left and right sides of a sail frame to deal with strong winds, wherein a thin cord is wound off against a winding force in strong winds and sail cloth is loosely bound by a thin cord or the like in a central portion of a vertical sail frame to allow strong winds to escape from both sides, a long winding time is provided using, for example, a balance wheel or the like to prevent oscillations caused by alternate high and low wind pressures applied perpendicularly to a sail cloth surface due to rotation of the sail cloth, and consequently the winding box returns gradually when wind velocity falls off.

7. A rotating-blade vertical-axis wind turbine comprising:
a central shaft; and a plurality of rotating blades adapted to revolve around the central shaft while turning on their own axes, wherein each of the rotating blades includes a pair of upper and lower horizontal frame members, a pair of left and right vertical frame members movable by being linearly guided along the horizontal frame shafts, sail cloth stretched between the pair of vertical frame members, and a sail winding bar placed penetrating the sail cloth via a clutch and adapted to wind the sail cloth by rotation of the sail winding bar.

8. A rotating-blade vertical-axis wind turbine comprising:
a central shaft; and a plurality of rotating blades adapted to revolve around the central shaft while turning on their own axes, wherein each of the rotating blades includes a pair of upper and lower horizontal frame members, a pair of left and right vertical frame members, and sail cloth stretched between the pair of vertical frame members; and at least one of pair of left and right vertical frame members is a rolling-curtain-type winding drum equipped with a winding stopper.

9. A rotating-blade vertical-axis wind turbine comprising:
a central shaft; and a plurality of rotating blades adapted to revolve around the central shaft while turning on their own axes, wherein the rotating blade includes a pair of upper and lower horizontal frame members, a pair of left and right vertical frame members, at least one of which is movable by being linearly guided along the horizontal frame shafts, and
sail cloth stretched between the pair of vertical frame members; and at least one of the left and right vertical frame members is a rolling-curtain-type winding drum.

10. A mobile offshore power generation facility comprising a plurality of rotating-blade vertical-axis wind turbines placed on a mobile offshore base.
